# EUROPÄISCHE PATENTSCHRIFT

(11) **EP 1 068 903 B1**
(45) Veröffentlichungstag und Bekanntmachung des Hinweises auf die Patenterteilung: **15.09.2004**
(21) Anmeldenummer: 99113391.9
(22) Anmeldetag: 10.07.1999
(51) Int. Cl.: B01L 9/04, F16M 11/10, B01D 3/08

(54) **Höhenverstellbares Stativ mit Haltevorrichtung und Verfahren zum Auskuppeln derselben**
Height-adjustable support with holder and method of uncoupling the holder
Support ajustable en hauteur, et méthode de découplage du système de maintien associé à ce support

(43) Veröffentlichungstag der Anmeldung: 17.01.2001
(73) Patentinhaber: Büchi Labortechnik AG, CH-9230 Flawil (CH)
(72) Erfinder: Studer, Hans-Rudolf, 9200 Gossau (CH)
(74) Vertreter: Hepp, Dieter

(56) Entgegenhaltungen:
- EP-A- 0 149 972
- DE-A- 4 200 118
- DE-U- 9 115 778
- US-A- 5 589 135

## Beschreibung

Die Erfindung betrifft ein höhenverstellbares Stativ, insbesondere ein Stativ für Rotationsverdampfer und ein Verfahren zum Auskuppeln der Haltevorrichtung in einem Stativ mit den Merkmalen des Oberbegriffs der unabhängigen Patentansprüche.

Mit derartigen Stativen, auch Schnellhebevorrichtungen genannt, kann beispielsweise ein Verdampferkolben in einem Wasserbad gehalten werden. Da der Verdampfungsvorgang nur durch rasches Herausheben des Kolbens aus dem Heizbad gestoppt werden kann, ist ein müheloses und rasches Verstellen des Stativs erwünscht.

Solche höhenverstellbare Stative sind beispielsweise aus EP 149 972, DE 26 49 950 oder DE 27 58 433 bekannt.

Ein erstes Erfordernis bei solchen Stativen ist die motorische und gleichzeitig die manuelle Bedienbarkeit des Stativs. Die Haltevorrichtung für den Verdampferkolben soll ausserdem im Notfall auch bei motorischem Antrieb manuell rasch und problemlos aus dem Heizbad hochgehoben werden können.

Gemäss der EP 149 972 wurden diese Probleme dadurch gelöst, dass die Haltevorrichtung für den Kolben über einen Seilzug mit einem Energiespeicher verbunden ist. Mit einer solchen Anordnung wurden bereits zufriedenstellende Resultate hinsichtlich motorischer und manueller Bewegbarkeit erzielt.

Es ist eine Aufgabe der vorliegenden Erfindung, die bekannten Stative weiter zu verbessern. Insbesonderte soll bei einer motorisch betätigbaren Haltevorrichtung die Möglichkeit der Entkopplung der Haltevorrichtung vom Antriebsmotor vereinfacht werden. Die Haltevorrichtung soll rasch und mit geringem Kraftaufwand vom Antriebsmotor entkoppelt werden können. Das erfindungsgemässe Stativ soll ausserdem ohne grossen konstruktiven Aufwand auf einfache und wirftschaftliche Weise herstellbar sein.

Eine Gefahr bei solchen bekannten Stativen besteht bei der Verwendung für Rotationsverdampfer darin, dass bei einem Unterbruch der Drehbewegung des Rotationsverdampferkolbens eine Überhitzung im Kolben eintritt. Eine weitere Aufgabe der Erfindung besteht deshalb darin, ein Stativ für einen Rotationsverdampfer zu schaffen, welches bei einem Unterbruch der Drehbewegung des Verdampferkolbens automatisch oder nur durch wenige Handgriffe des Benutzers aus dem Heizbad hochgehoben werden kann.

Diese Aufgaben werden erfindungsgemäss mit einem Stativ und einem Verfahren gelöst, welche die Merkmale im kennzeichnenden Teil der unabhängigen Ansprüche aufweisen. Weitere bevorzugte Ausführungsformen sind Gegenstand der Unteransprüche.

Das höhenverstellbare Stativ ist insbesondere für einen Rotationsverdampfer geeignet. Es wären aber auch andere Einsatzzwecke denkbar. Das Stativ weist eine Haltevorrichtung zum Befestigen eines Glassatzes auf. Der Glassatz besteht typischerweise aus einem Kolben eines Rotationsverdampfers. Die Haltevorrichtung ist mit an sich bekannten Vorrichtungen zum Drehen des Glassatzes versehen.

Das Stativ weist ausserdem eine Stativstange auf. Die Haltevorrichtung ist entlang der Stativstange verschiebbar. Die Haltevorrichtung ist ausserdem mit einem, mit einem Kupplungselement zusammenwirkenden, z.B. um eine Seiltrommel gewickelten Seilzug in Wirkverbindung bringbar.

Erfindungsgemäss ist der Seilzug derart befestigt, dass die Spannung des Seilzuges veränderbar ist. In einer ersten Lage ist die Spannung des Seilzuges maximal und erzeugt Reibschluss mit dem Kupplungselement, insbesondere mit der Seiltrommel. In einer zweiten Lage ist die Spannung minimal und der Reibschluss zwischen Seilzug und Seiltrommel ist aufgehoben.

In der ersten Lage bewegt sich deshalb durch Drehen der Seiltrommel die mit der Seiltrommel in Wirkverbindung stehende Haltevorrichtung. In der zweiten Lage ist die Haltevorrichtung aufgrund des fehlenden Reibschlusses zwischen Seilzug und Seiltrommel von der Seiltrommel entkoppelt.

Anstelle einer Seiltrommel sind andere Kupplungselemente denkbar, die das Erzeugen eines Kraftschlusses bei gespanntem Seilzug erlauben.

In der zweiten Lage kann die Haltevorrichtung also einfach manuell bewegt, beispielsweise hochgehoben werden. In der ersten Lage ist die Haltevorrichtung aufgrund des Reibschlusses zwischen Seilzug und Seiltrommel nicht frei bewegbar. Bei Drehen der Seiltrommel (beispielsweise durch einen Motorantrieb) bewegt sich die Haltevorrichtung. Bei Stillstand der Seiltrommel verbleibt die Haltevorrichtung in einer fixen Position.

Unter Reibschluss wird in diesem Zusammenhang eine wenigstens teilweise eine Kraft übertragende Verbindung zwischen dem Seilzug und der Seiltrommel verstanden. Eine Bewegung der Seiltrommel führt zu einer Bewegung des Seilzuges.

Bei einem Stillstand der Rotationsbewegung des Verdampferkolbens wird die Spannung am Seilzug reduziert. Damit ist die Haltevorrichtung bezüglich dem Stativ frei bewegbar und kann hochgehoben werden.

Die Seiltrommel ist vorzugsweise drehbar gelagert und motorisch antreibbar. Es ist aber auch denkbar, an der Haltevorrichtung eine nicht drehbare Seiltrommel vorzusehen und den Seilzug auf andere geeignete Weise anzutreiben.

Gemäss einem weiteren Aspekt der Erfindung, der in Kombination mit der vorgehend beschriebenen Stativkonstruktion besonders vorteilhaft ist, ist bei einem höhenstellbaren Stativ mit einer Haltevorrichtung, die entlang einer Stativstange verschiebar ist, ein Antriebsmotor an der Haltevorrichtung selbst angeordnet. Der Motor ist mit bezüglich der Stativstange feststehenden Haltemitteln in Eingriff bringbar.

Als Haltemittel ist beispielsweise eine an der Stativstange angeordnete Zahnstange denkbar. Der Antriebsmotor kann mit einem Zahnrad versehen sein, welches in die Zahnstange eingreift und welches zur Entkoppelung der Haltevorrichtung ausser Eingriff mit der Zahnstange gebracht werden kann.

In einem besonders bevorzugten Ausführungsbeispiel sind die Haltemittel als Seilzug ausgebildet, der bezüglich der Stativstange fixiert ist. Der Antriebsmotor ist mit einer Seiltrommel versehen, um welche der Seilzug gewickelt ist. Der Seilzug übernimmt in diesem Fall die Funktion der Zahnstange. Die Haltevorrichtung kann vom Seilzug durch Reduktion der Spannung des Seilzuges entkoppelt werden. Der Seilzug ist bevorzugt zwischen einem fixen Endpunkt und einem bewegbaren Endpunkt eingespannt. Durch Bewegen des einen Endpunkts in Richtung des Seilzuges kann die Spannung des Seilzuges reduziert werden. Bei gespanntem Seilzug führt eine Drehung der Seiltrommel zu einer Bewegung der die Seiltrommel tragenden Haltevorrichtung. Bei entspanntem Seilzug lässt sich die Haltevorrichtung frei bewegen.

Gemäss einem alternativen Ausführungsbeispiel ist der Seilzug in sich geschlossen ausgebildet und fest mit der Haltevorrichtung verbunden. Der Seilzug ist um eine drehbar gelagerte Seiltrommel gewickelt, die bezüglich der Stativstange fest angeordnet ist. Der Seilzug ist um zwei Umlenkrollen geführt. Durch Veränderung des Abstands zwischen den Umlenkrollen kann die Seilspannung variiert werden. Bei ausreichend hoher Seilspannung ist die Reibverbindung zwischen Seiltrommel und Seilzug ausreichend gross, sodass eine Drehung der Seiltrommel zu einer Bewegung der Haltevorrichtung führt. Bei ausreichend geringer Seilspannung besteht keine Reibverbindung, sodass die Haltevorrichtung frei bewegt werden kann. Der Seilzug kann aber auch um eine fest mit der Haltevorrichtung verbundene Seiltrommel gewickelt werden und durch geeignete Mittel angetrieben werden.

In einem bevorzugten Ausführungsbeispiel ist der bewegbare Endpunkt des zwischen den beiden Endpunkten eingespannten Seilzuges als Fixierung ausgebildet, die mit einer Feder vorgespannt ist. Die Feder erzeugt eine ausreichende Spannung am Seilzug, sodass im Normalzustand die Seiltrommel mit dem Seilzug in Reibverbindung steht. Durch Verschieben der Fixierung gegen die Kraft der Feder kann die Seiltrommel vom Seilzug entkoppelt werden

Gemäss einem weiter bevorzugten Ausführungsbeispiel ist das Stativ ausserdem mit einem Betätigungsarm zum Bewegen der Fixierung gegen die Federkraft versehen. Der Betätigungsarm kann drehbar um einen Drehpunkt gelagert sein, sodass eine Hebelkraft erzeugt wird. Durch Betätigen des Betätigungsarms wird die Spannung des Seilzugs reduziert und der Seilzug entkoppelt sich von der Seiltrommel. Die Haltevorrichtung kann bei betätigtem Betätigungsarm frei verschoben werden.

Es ist ausserdem auch denkbar, den bewegbaren Endpunkt motorisch zu bewegen, beispielsweise durch einen Magnetantrieb. Eine motorische Bewegbarkeit des bewegbaren Endpunktes erlaubt eine automatische Entkoppelung der Haltevorrichtung bei einem Betriebsunterbruch des Rotationsverdampfers. Zu diesem Zweck kann eine Anordnung zum automatischen Bewegen des bewegbaren Endpunktes bei Stillstand eines drehbar gehaltenen Glassatzes vorgesehen sein.

Eine besonders bevorzugte Ausführungsform der Erfindung ergibt sich, wenn die Haltevorrichtung ausserdem über einen Kraftspeicher direkt oder indirekt mit der Stativstange verbunden ist. Die Haltevorrichtung ist dabei gegen die Kraft des Kraftspeichers absenkbar und mit Hilfe des Kraftspeichers hochhebbar. Wenn der Seilzug gespannt ist, steht der Seilzug mit der Seiltrommel in Reibverbindung. Bei gespanntem Seilzug bleibt die Haltevorrichtung bei sich nicht drehender Seiltrommel trotz dem Kraftspeicher in einer bestimmten Lage. Durch Drehen der Seiltrommel wird die Haltevorrichtung gegen die Kraft bzw. mit Unterstützung des Kraftspeichers bewegt. Bei Reduktion der Spannung des Seilzuges wird der Reibschluss zwischen Seiltrommel und Seilzug aufgehoben, sodass die Haltevorrichtung mit Hilfe des Kraftspeichers automatisch hochgehoben wird. Diese Anordnung ist vor allem in Kombination mit dem voranstehend beschriebenen Betätigungsarm vorteilhaft. Durch einfaches Drücken des Betätigungsarms wird die Spannung des Federzuges reduziert und die Haltevorrichtung wird dank dem Kraftspeicher automatisch hochgehoben.

Die Spannung, die zum Erzielen eines Reibschlusses zwischen Seiltrommel und Seilzug notwendig ist, hängt nicht nur von den Reibungsquoeffizienten der Seiltrommel und des Seilzuges sondern auch von der Grösse der Kraft des Kraftspeichers und dem Gewicht der Haltevorrichtung ab. Die Spannung des Seilzuges wird entsprechend den möglichen Gewichten der Haltevorrichtung und entsprechend der Kraft des Kraftspeichers dimensioniert.

Die Haltevorrichtung kann vorzugsweise auf Rollen entlang einer Stativstange verschiebbar gelagert sein. Die Stativstange ist dabei bevorzugt als Profil ausgebildet, das Führungsschienen für die Rollen aufweist.

Die Führung einer Haltevorrichtung in einer Führungsschiene mittels Rollen kann selbstverständlich auch bei anders ausgebildeten Stativanordnungen vorteilhaft sein.

Die Erfindung wird im Folgenden in Ausführungsbeispielen und anhand der Zeichnungen näher erläutert. Es zeigen:
- Figur 1: eine schematische Darstellung eines erfindungsgemässen Stativs in der Seitenasicht,
- Figur 2: Draufsicht auf die Stativstange des Stativs gemäss Figur 1,
- Figur 3: Seitenansicht der Seiltrommel des Ausführungsbeispiels gemäss Figur 1,
- Figuren 4a bis 4d: schematische Darstellungen von alternativen Ausführungsbeispielen und
- Figur 5: eine perspektivische Darstellung einer auf einer Führungsschiene verschiebbar gehaltenen Haltevorrichtung.

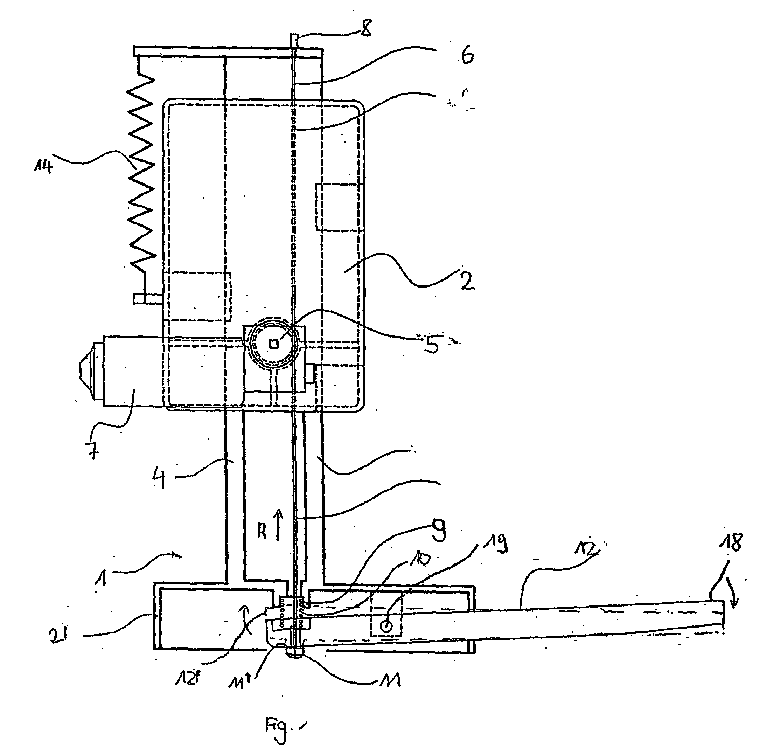

Figur 1 zeigt ein höhenverstellbares Stativ 1. Das Stativ 1 besteht im wesentlichen aus einer Grundplatte 21, auf welcher eine Stativstange 4 befestigt ist. Entlang der Stativstange 4 ist eine Haltevorrichtung 2 verschiebbar gelagert. Die Haltevorrichtung 2 dient zur Aufnahme eines Glassatzes, insbesondere eines Kolbens für einen Rotationsverdampfer. Die Haltevorrichtung ist ausserdem mit einer Anordnung zum Drehen des Glassatzes versehen. Ausserdem ist dem Stativ ein Heizbad zugeordnet. Die Ausbildung des Heizbades und der Drehvorrichtung für den Glassatz ist dem Fachmann bekannt und wird nicht im Detail erläutert.

Die Haltevorrichtung 2 ist ausserdem mit einem Antriebsmotor 7 versehen. Der Antriebsmotor 7 treibt über eine nicht dargestellte Getriebeanordnung eine Seiltrommel 5 an. Die Stativstange 4 ist mit einem Seilzug 6 versehen. Der Seilzug 6 ist an einem Ende 8 mit einem fixen Endpunkt am Stativ befestigt. Das andere Ende 9 des Seilzugs 6 ist in einer beweglichen Fixierung gehalten. Die bewegliche Fixierung besteht aus einem Betätigungsarm 12. Der Betätigungsarm 12 ist mit einer Bohrung 25 versehen, durch welche der Seilzug 6 geführt ist. Der Seilzug 6 ist auf der Oberfläche des Betätigungsarms 12 mit einer Schraube 11 gehalten. Der Betätigungsarm 12 und damit der bewegbare Endpunkt 9 des Seilzugs 6 sind in einer Richtung R entlang dem Seilzug gegen die Kraft einer Feder 10 verschiebbar.

Der Betätigungsarm 12 ist um einen Drehpunkt 19 drehbar gelagert. Durch Herunterdrücken des Endes 18 des Betätigungsarms 12 in Pfeilrichtung wird das bewegbare Ende 9 des Seilzuges 6 in Pfeilrichtung nach oben verschwenkt. Die Lage der Schraube 11' und des Betätigungsarms 12' in gegen die Feder gespannte Position ist gestrichelt dargestellt.

Es ist auch denkbar, eine Anordnung zum automatischen Hochheben der Haltevorrichtung vorzusehen, die bei Drücken eines Stopp-Knopfes oder bei Überhitzung des Glassatzes bzw. bei Stillstand des Glassatzes den Seilzug 6 automatisch entspannt.

Der Seilzug 6 ist um die Seiltrommel 5 gewickelt. Vorzugsweise ist eine Wicklung um 720° vorgesehen. Zum Verändern der Reibwirkung kann es aber auch möglich sein, mehr oder weniger Umwicklungen vorzusehen.

Die Haltevorrichtung 2 ist ausserdem über einen Kraftspeicher 14 mit der Stativstange 4 bzw. mit mit der Stativstange 4 verbundenen Elementen verbunden. Der Kraftspeicher 14 ist schematisch als Feder dargestellt. Es sind neben Spiralfedern auch Gasdruckfeder oder auch andere Kraftspeicher denkbar. Die Haltevorrichtung 4 kann an einem Kraftspeicher 14 unter Zug aufgehängt oder auf einem komprimierbaren Kraftspeicher abgestützt sein. Gasdruckfedern sind in diesem Zusammenhang besonders bevorzugt.

Wenn sich der Betätigungsarm 12' in der gestrichelt dargestellten Lage befindet, ist der Seilzug 6 entspannt und die Reibkraft zwischen dem Seilzug 6 und der Seiltrommel 5 ist so gering, dass die Haltevorrichtung 2 sich frei bewegen lässt. Aufgrund des Kraftspeichers 14 wird bei nach unten gedrücktem Ende 18 des Betätigungsarms 12 die Haltevorrichtung 2 automatisch hochgehoben.

Ohne äussere Krafteinwirkung befindet sich der Betätigungsarm 12 aufgrund der Kraft der Feder 10 in der mit durchgehenden Linien dargestellten Position. Dadurch ist der Seilzug 6 gespannt und steht mit der Seiltrommel 5 in Reischluss. Die Kraft der Feder 10 ist ausreichend gross gewählt, sodass die Reibkraft zwischen Seiltrommel 5 und Seilzug 6 ausreicht, um die Kraft des Kraftspeichers 14 und das Eigengewicht der Haltevorrichtung 2 (und eines montierten Glassatzes) zu kompensieren. Wenn die Seiltrommel 5 sich nicht dreht, verbleibt die Haltevorrichtung 2 in einer bestimmten Position. Durch Anhalten der Seiltrommel 5 wird die Haltevorrichtung 2 festgestellt. Sobald die Seiltrommel 5 bei gespanntem Seilzug 6 gedreht wird, wird die Haltevorrichtung 2 entsprechend der Drehrichtung der Seiltrommel 5 hochgehoben oder nach unten gefahren.

Der Seilzug 6 besteht vorzugsweise aus einem ummantelten Stahlseil oder auch aus einem Kunststoffseil, beispielsweise aus Keflar. Die Seiltrommel 5 besteht aus Stahl oder Aluminium Die Haltevorrichtung ist als verschiebbar entlang der Stativstange gelagerter Wagen ausgebildet. Der Wagen kann aus Aluminium oder aus Kunststoff bestehen. Der schematisch dargestellte Antriebsmotor 7 ist vorzugsweise als Elektromotor ausgebildet.

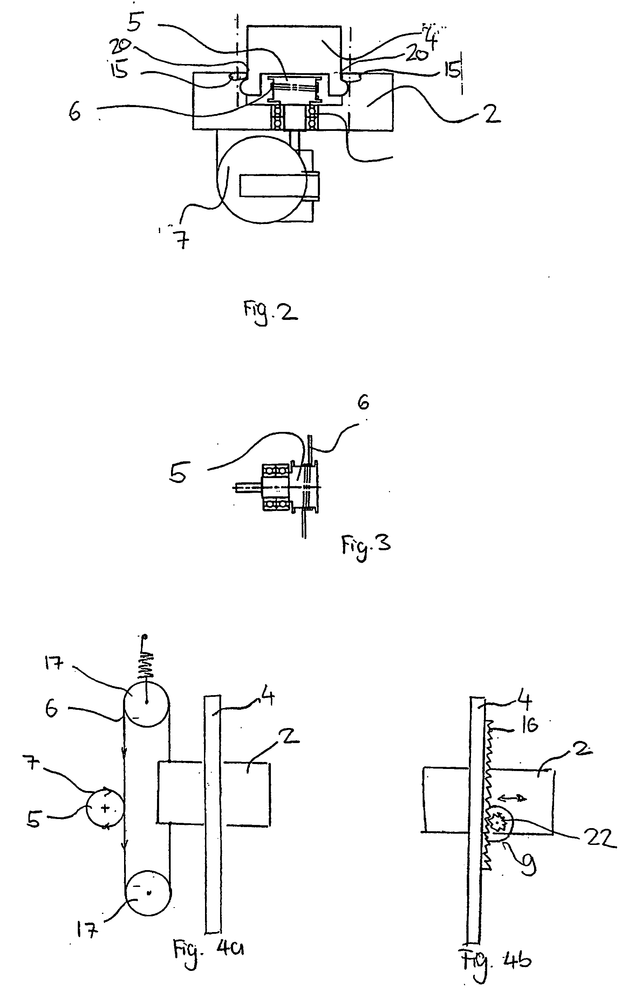

In Figur 2 ist eine Draufsicht auf die Stativstange 4 und die Haltevorrichtung 2 gezeigt. Die Stativstange 4 ist als Führungsschiene ausgebildet, die Führungen 20 aufweist. Die Haltevorrichtung 2 weist drei Rollen 15 auf, die in den Führungsschienen 20 gleiten. Die drei Rollen 15 sind in einer Ebene angeordnet. In einer der Führungsschienen 20 gleitet eine Rolle während in der anderen Führungsschiene 20 zwei Rollen gleiten. Durch die Dreipunktauflage wird eine besonders stabile und verkantungsfreie Führung der Haltevorrichtung 2 entlang der Stativstange 4 erzielt.

Der Antriebsmotor 7 ist fest mit der Haltevorrichtung 2 verbunden und treibt die fest mit der Haltevorrichtung verbundene Seiltrommel 5 an.

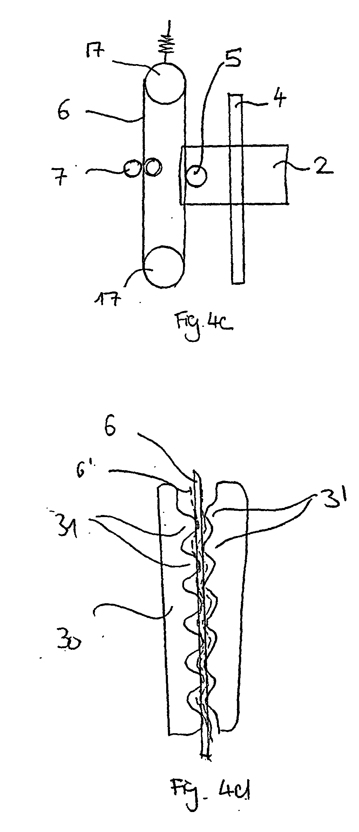

.In Figur 3 ist die Seiltrommel 5 vergrössert in Seitenansicht dargestellt. Der Seilzug 6 ist über einen Winkel von 1080° (d.h. 3 mal) um die Seiltrommel 5 gewickelt.

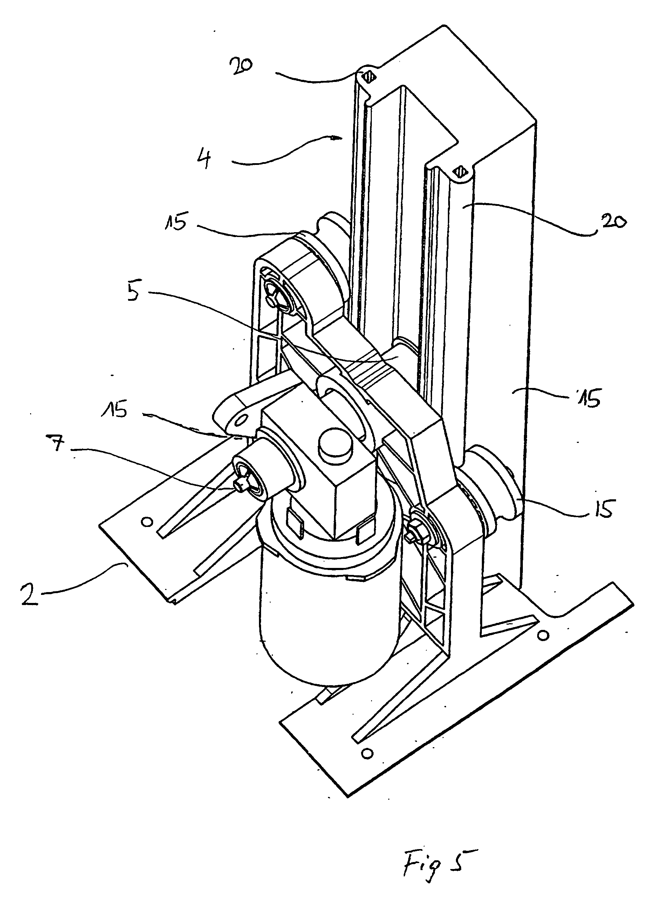

In Figuren 4a und 4b sind alternative Ausführungsformen der Erfindung gezeigt.

Gemäss Figur 4a ist die Haltevorrichtung 2 entlang der Stativstange 4 veschiebbar und fest mit einem Seilzug 6 verbunden. Der Seilzug 6 ist in sich geschlossen ausgebildet und wird über zwei Umlenkrollen 17 umgelenkt. Das Stativ weist ausserdem eine Seiltrommel 5 mit einem Antriebsmotor 7 auf. Die Seiltrommel 5 ist fest bezüglich der Stativstange 4 angeordnet. Der Seilzug 6 ist um die Seiltrommel 5 gewickelt. Eine der beiden Umlenkrollen 17 ist ausserdem beweglich ausgebildet, sodass die Spannung auf den Seilzug 6 verändert werden kann. Bei gespanntem Seilzug 6 ist die Reibkraft zwischen dem Seilzug 6 und der Seiltrommel 5 ausreichend gross, damit eine Drehung der Seiltrommel 5 zu einer Bewegung der Haltevorrichtung 2 führt bzw. damit bei feststehender Seiltrommel 5 die Haltevorrichtung 2 festgestellt ist. Durch Entspannen des Seilzugs 6 wird der Seilzug 6 von der Seiltrommel 5 entkoppelt und die Haltevorrichtung 2 kann frei bewegt werden. Selbstverständlich sind bei Ausführungsbeispiel gemäss Figur 4a die in Figur 1 gezeigten Details, insbesondere Kraftspeicher, Betätigungsarm ebenfalls vorteilhaft. Der Betätigungsarm kann zum Verschieben der bewegbaren, beispielsweise der oberen Umlenkrolle 17 in ähnlicher Weise eingesetzt werden.

In Figur 4b ist ein alternatives Ausführungsbeispiel gezeigt, welches nicht zur beanspruchten Erfindung gehört. Der Antriebsmotor 7 ist fest mit der Haltevorrichtung 2 verbunden. Der Antriebsmotor 9 weist ein Zahnrad 22 auf, welches mit einer Zahnstange 16 in Eingriff bringbar ist. Die Zahnstange 16 ist fest mit der Stativstange 4 verbunden. Durch seitliches Verschieben des Antriebsmotors 9 in Richtung des Doppelpfeils kann das Zahnrad 22 ausser Eingriff mit der Zahnstange 16 gebracht werden. Die Haltevorrichtung 2 lässt sich damit ebenfalls frei bewegen.

Gemäss dem Ausführungsbeispiel in Figur 4c weist die Haltevorrichtung 2 eine nicht drehbare, als Kupplungselement wirkende Seiltrommel 5 auf, um die der Seilzug 6 gewickelt ist. Der Seilzug 6 ist durch einen Motor 7 antreibbar, der den Seilzug 6 einklemmende Walzen dreht. Durch Entspannen des Seilzugs 6 wird der Reibschluss zwischen der Seiltrommel 5 und dem Seilzug 6 aufgehoben. Die Haltevorrichtung ist frei bewegbar

In Figur 4d ist ein alternatives Kupplungssystem 30 gezeigt. Das Kupplungssystem kann im Ausführungsbeispiel gemäss Figur 4c anstelle der Seiltrommel 5 eingesetzt werden. Bei gespanntem Seilzug 6 besteht Reibschluss zwischen den nach innen gerichteten Nasen 31 des Kupplungselementes 30 und dem Seilzug 6. Bei entspanntem Seilzug 6 (gestrichelt dargestellt) gleitet der Seilzug 6 im Kupplungselement 30.

Figur 5 zeigt in perspektivischer Darstellung einen Ausschnitt aus der Haltevorrichtung 2, welche entlang der Stativstange 4 verschiebbar gehalten ist. Die Stativstange 4 ist als Führungsschiene ausgebildet, die zwei Führungen 20 aufweist. Die Haltevorrichtung 2 ist mit drei Rollen 15 in den Führungsschienen 20 verschiebbar gelagert. Eine erste Rolle verläuft in einer ersten Führungsschiene 20 (siehe rechte Seite in Figur 5). In der in Figur 5 links dargestellten Führungsschiene 20 sind zwei Rollen 15 gelagert, wobei die untere Rolle 15 durch den Antriebsmotor 9 und eine Getriebeanordnung verdeckt ist. Die Seiltrommel 5 ist auf einer durch den Antriebsmotor 7 betätigten Welle gelagert.

## Patentansprüche

1. Höhenverstellbares Stativ (1), insbesondere für Rotationsverdampfer,
mit einer Haltevorrichtung (2) zum Befestigen eines Glassatzes,
die entlang einer Stativstange (4) verschiebbar ist und die mit einem, mit einem Kupplungselement (5, 30) zusammenwirkenden, vorzugsweise um eine Seiltrommel (5) gewickelten Seilzug (6) in Wirkverbindung bringbar ist,
**dadurch gekennzeichnet, dass** Mittel vorhanden sind, mit denen die Spannung des Seilzugs (6) derart veränderbar ist, dass in einer ersten Lage Reibschluss zwischen Seilzug (6) und Kupplungselement, insbesondere Seiltrommel (5), herstellbar ist, und
dass in einer zweiten Lage die Spannung des Seilzugs (6) so reduziert ist, dass Schlupf entsteht und Reibschluss zwischen Seilzug (6) und Kupplungselement, insbesondere Seiltrommel (5), aufgehoben ist.

2. Stativ nach Anspruch 1,
mit einer Haltevorrichtung (2) zum Befestigen eines Glassatzes, welche Haltevorrichtung (2) entlang einer Stativstange (4) verschiebbar ist und einen Antriebsmotor (7) aufweist, mittels welchem die Haltevorrichtung (2) antreibbar ist,
**dadurch gekennzeichnet, dass** der Antriebsmotor (7) an der Haltevorrichtung (2) angeordnet ist und mit bezüglich der Stativstange (4) feststehenden Haltemitteln in Eingriff bringbar und auskoppelbar ist.

3. Stativ nach einem der Ansprüche 1 oder 2, **dadurch gekennzeichnet, dass** der Seilzug (6) zwischen einem in Bezug auf das Stativ festen Endpunkt (8) und einem bewegbaren Endpunkt (9) eingespannt ist, wobei der bewegbare Endpunkt (9) in Richtung (R) des Seilzuges (6) verschiebbar ist.

4. Stativ nach Anspruch 3, **dadurch gekennzeichnet, dass** der bewegbare Endpunkt (9) als mit einer Feder (10) vorgespannte Fixierung für den Seilzug (6) ausgebildet ist.

5. Stativ nach einem der Ansprüche 3 oder 4, **dadurch gekennzeichnet, dass** das Stativ mit einem Betätigungsarm (12) zum Bewegen des bewegbaren Endpunktes (9) gegen die Kraft der Feder (10) versehen ist.

6. Stativ nach einem der Ansprüche 3 bis 5, **dadurch gekennzeichnet, dass** der bewegbare Endpunkt (9) motorisch bewegbar ist.

7. Stativ nach Anspruch 6, **dadurch gekennzeichnet, dass** das Stativ eine Anordnung zum automatischen Bewegen des bewegbaren Endpunktes (9), insbesondere bei Stillstand eines drehbar gehaltenen Glassatzes, aufweist, wodurch der Seilzug (6) entspannbar ist.

8. Stativ nach einem der Ansprüche 1 bis 7, **dadurch gekennzeichnet, dass** die Haltevorrichtung (2) über einen Kraftspeicher (14) direkt oder indirekt mit der Stativstange (4) verbunden ist, wobei die Haltevorrichtung (2) gegen die Kraft des Kraftspeichers (14) absenkbar und mit Hilfe des Kraftspeichers (14) hochhebbar ist.

9. Stativ nach einem der Ansprüche 1 bis 8, dadurch gekennezeichnet, dass die Haltevorrichtung (2) mit Rollen (15), vorzugsweise mit drei Rollen (15), verschiebbar auf der Stativstange gelagert ist.

10. Stativ nach Anspruch 9, **dadurch gekennzeichnet, dass** die Stativstange (4) als Führungsschiene mit Führungen (20) ausgebildet ist, entlang welchen die Rollen (15) geführt sind.

11. Stativ nach einem der Ansprüche 1 bis 10, **dadurch gekennzeichnet, dass** die Seiltrommel (5) drehbar gelagert ist und vorzugsweise motorisch antreibbar ist.

12. Verfahren zum Auskuppeln der Haltevorrichtung (2) für einen Glassatz am Stativ eines Rotationsverdampfers von einem Antriebsmotor (7), wobei der Antriebsmotor (7) über einen mit einem Kupplunselement zusammenwirkenden, insbesondere um eine Seiltrommel (5) gewickelten Seilzug (6) in Antriebsverbindung mit der Haltevorrichtung (2) steht, **dadurch gekennzeichnet, dass** der Seilzug (6) zum Auskuppeln entspannt wird.

13. Rotationsverdampfer mit einem Stativ nach einem der Ansprüche 1 bis 11.

## Claims

1. A height-adjustable stand (1), in particular for rotary evaporators, comprising a holding device (2) for fixing a glass set,
which holding device (2) is displaceable along a stand rod (4) and can be operatively connected to a cable pull (6) co-operating with a coupling element (5, 30) and preferably wound around a cable drum (5),
**characterised in that** there are provided means with which the tension of the cable pull (6) is variable in such a way that in a first position frictional lock can be produced between the cable pull (6) and the coupling element, in particular the cable drum (5), and
in a second position the tension of the cable pull (6) is so reduced that slip occurs and friction lock between the cable pull (6) and the coupling element, in particular the cable drum (5), is removed.

2. A stand according to claim 1
comprising a holding device (2) for fixing a glass set, which holding device (2) is displaceable along a stand rod (4) and has a drive motor (7) by means of which the holding device (2) is drivable,
**characterised in that** the drive motor (7) is arranged at the holding device (2) and can be brought into engagement with and uncoupled from holding means which are stationary with respect to the stand rod (4).

3. A stand according to one of claims 1 and 2 **characterised in that** the cable pull (6) is tensioned between an end point (8) which is fixed in relation to the stand and a movable end point (9), wherein the movable end point (9) is displaceable in the direction (R) of the cable pull (6).

4. A stand according to claim 3 **characterised in that** the movable end point (9) is in the form of a fixing for the cable pull (6), said fixing being biased with a spring (10).

5. A stand according to one of claims 3 and 4 **characterised in that** the stand is provided with an actuating arm (12) for moving the movable end point (9) against the force of the spring (10).

6. A stand according to one of claims 3 to 5 **characterised in that** the movable end point (9) is movable by motor means.

7. A stand according to claim 6 **characterised in that** the stand has an arrangement for automatically moving the movable end point (9), in particular upon stoppage of a rotatably held glass set, whereby the cable pull (6) can be slackened.

8. A stand according to one of claims 1 to 7 **characterised in that** the holding device (2) is connected to the stand rod (4) indirectly or directly by way of a force-storage means (14), wherein the holding device (2) can be lowered against the force of the force-storage means (14) and can be raised by means of the force-storage means (14).

9. A stand according to one of claims 1 to 8 **characterised in that** the holding device (2) is mounted displaceably on the stand rod with rollers (15), preferably three rollers (15).

10. A stand according to claim 9 **characterised in that** the stand rod (4) is in the form of a guide rail with guides (20), along which the rollers (15) are guided.

11. A stand according to one of claims 1 to 10 **characterised in that** the cable drum (5) is mounted rotatably and is preferably drivable by motor means.

12. A method of uncoupling the holding device (2) for a glass set on the stand of a rotary evaporator from a drive motor (7), wherein the drive motor (7) is drivingly connected to the holding device (2) by way of a cable pull (6) co-operating with a coupling element and wound in particular around a cable drum (5), **characterised in that** the cable pull (6) is slackened for uncoupling.

13. A rotary evaporator having a stand according to one of claims 1 to 11.

## Revendications

1. Statif (1) réglable en hauteur, en particulier pour vaporisateurs rotatifs,
comportant un dispositif de fixation (2) qui est destiné à fixer un ensemble en verre, qui est mobile le long d'une tige de statif (4) et qui est apte à être mis en relation fonctionnelle avec un câble de transmission (6) coopérant avec un élément d'accouplement (5, 30) et de préférence enroulé sur un tambour à câble (5),
**caractérisé en ce qu'**il est prévu des moyens grâce auxquels la tension du câble de transmission (6) est apte à être modifiée de telle sorte que dans une première position, une adhérence par friction puisse être obtenue entre le câble de transmission (6) et l'élément d'accouplement, en particulier le tambour à câble (5),
et **en ce que** dans une seconde position, la tension du câble de transmission (6) est réduite de telle sorte qu'un patinage apparaisse et que l'adhérence par friction entre le câble de transmission (6) et l'élément d'accouplement, en particulier le tambour à câble (5), soit supprimée.

2. Statif selon la revendication 1,
comportant un dispositif de fixation (2) pour la fixation d'un ensemble en verre, qui est mobile le long d'une tige de statif (4) et qui comporte un moteur d'entraînement (7) grâce auquel il est apte à être entraîné,
**caractérisé en ce que** le moteur d'entraînement (7) est disposé sur le dispositif de fixation (2) et est apte à être mis en contact avec des moyens de fixation fixes par rapport à la tige de statif (4), et à être désaccouplé de ceux-ci.

3. Statif selon la revendication 1 ou 2, **caractérisé en ce que** le câble de transmission (6) est tendu entre un point d'extrémité (8) fixe par rapport au statif et un point d'extrémité mobile (9), le point d'extrémité mobile (9) étant apte à être déplacé dans le sens (R) du câble de transmission (6).

4. Statif selon la revendication 3, **caractérisé en ce que** le point d'extrémité mobile (9) est conçu comme une fixation pour le câble de transmission (6) qui est contrainte à l'aide d'un ressort (10).

5. Statif selon la revendication 3 ou 4, **caractérisé en ce que** le statif est pourvu d'un bras d'actionnement (12) pour déplacer le point d'extrémité mobile (9) à l'encontre de la force du ressort (10).

6. Statif selon l'une des revendications 3 à 5, **caractérisé en ce que** le point d'extrémité mobile (9) est mobile grâce à un moteur.

7. Statif selon la revendication 6, **caractérisé en ce que** le statif comporte un dispositif pour déplacer automatiquement le point d'extrémité mobile (9), en particulier lors de l'arrêt d'un ensemble en verre rotatif, moyennant quoi le câble de transmission est apte à être détendu.

8. Statif selon l'une des revendications 1 à 7, **caractérisé en ce que** le dispositif de fixation (2) est relié par l'intermédiaire d'un accumulateur d'énergie (14), directement ou indirectement, à la tige de statif (4), le dispositif de fixation (2) étant apte à être abaissé à l'encontre de la force de l'accumulateur d'énergie (14) et à être soulevé à l'aide de celui-ci.

9. Statif selon l'une des revendications 1 à 8, **caractérisé en ce que** le dispositif de fixation (2) est monté mobile sur la tige de statif grâce à des galets (15), de préférence trois galets (15).

10. Statif selon la revendication 9, **caractérisé en ce que** la tige de statif (4) est conçue comme un rail de guidage avec des guides (20) le long desquels les galets (15) sont guidés.

11. Statif selon l'une des revendications 1 à 10, **caractérisé en ce que** le tambour à câble (5) est monté en rotation et est de préférence apte à être entraîné par un moteur.

12. Procédé pour désaccoupler d'un moteur d'entraînement (7) le dispositif de fixation (2) prévu pour un ensemble en verre sur le statif d'un vaporisateur rotatif, le moteur d'entraînement (7) étant en relation d'entraînement avec le dispositif de fixation (2) par l'intermédiaire d'un câble de transmission (6) coopérant avec un élément d'accouplement et enroulé en particulier sur un tambour à câble (5),
**caractérisé en ce que** le câble de transmission (6) est détendu pour le désaccouplement.

13. Vaporisateur rotatif avec un statif selon l'une des revendications 1 à 11.
